Europäisches Patentamt

European Patent Office

Office européen des brevets

(11) Publication number: **0 185 082**
**B1**

(12) **EUROPEAN PATENT SPECIFICATION**

(45) Date of publication of patent specification: **16.08.90**

(21) Application number: **85903466.2**

(22) Date of filing: **10.06.85**

(86) International application number:
**PCT/US85/01062**

(87) International publication number:
**WO 86/00170 03.01.86 Gazette 86/01**

(51) Int. Cl.⁵: **H 04 N 3/233, H 01 J 29/56**

(54) GULLWING DISTORTION CORRECTED DEFLECTION CIRCUITRY FOR A SQUARE-PLANAR PICTURE TUBE.

(30) Priority: **12.06.84 GB 8414946**
**12.06.84 GB 8414947**
**10.05.85 US 733661**

(43) Date of publication of application:
**25.06.86 Bulletin 86/26**

(45) Publication of the grant of the patent:
**16.08.90 Bulletin 90/33**

(84) Designated Contracting States:
**AT DE FR GB IT SE**

(56) References cited:
**DE-A-2 010 814**
**US-A-4 329 671**

**TELEFUNKEN SPRECHER, no. 68, February 1976, pages 3-32, Empelde, DE; H. UHLENHUT: "Nord-Süd-Entzerrung"**

(73) Proprietor: **RCA LICENSING CORPORATION**
**2 Independence Way**
**Princeton New Jersey 08540 (US)**

(72) Inventor: **McDONALD, James, Alexander**
**1306 Lawrence Road**
**Carmel, ID 46032 (US)**
Inventor: **WAYBRIGHT, George, Cleveland**
**6317 Northwood Drive**
**Carmel, ID 46032 (US)**
Inventor: **WILLIS, Donald, Henry**
**5175 East 74th Place**
**Indianapolis, ID 46250 (US)**
Inventor: **SUTHERLAND II, Hugh, Ferrar**
**10121 King Arthur Court Apartment H**
**Indianapolis, ID 46229 (US)**
Inventor: **LUZ, David, Warren**
**5409 Ashbourne Lane**
**Indianapolis, ID 46226 (US)**
Inventor: **HAFERL, Peter, Eduard**
**Feldblumenstrasse 20**
**CH-8134 Adliswil (CH)**

(74) Representative: **Smith, Thomas Ian Macdonald**
**RCA International Limited Burdett House 15-16**
**Buckingham Street**
**London WC2N 6DU (GB)**

Courier Press, Leamington Spa, England.

## Description

This invention relates to gullwing distortion corrected deflection circuits.

New, flatter faceplate picture tubes, such as the RCA Corporation square-planar picture tubes, have aspherical faceplate curvatures. A tube of this type, having a complex curvature faceplate, is described in the following U.K. published applications:

1. U.K. Published Application 2136200A, dated 12 September 1984, in the name of F. R. Ragland, Jr. and entitled Cathode-ray Tube having an Improved Shadow Mask Contour.

2. U.K. Published Application 2136198A, dated 12 September 1984, in the name of F. R. Ragland, Jr. and entitled Cathode-ray Tube having a Faceplate Panel with a Substantially Planar Periphery.

3. U.K. Published Application 2136199A, dated 12 September 1984, in the name of R. J. D'Amato et al., and entitled, Cathode-ray Tube having Different Curvature Along Major and Minor Axes.

4. U.K. Published Application 2147142A, dated 1 May 1985, in the name of R. J. D'Amato et al., and entitled, Cathode-ray Tube having a Faceplate Panel With an Essentially Planar Screen Periphery.

In one form of flatter faceplate picture tube, as typified by the RCA 110° COTY—SP, square-planar, 27V color television picture tube, A68ACC10X, the formula for the tube faceplate sagittal height, z, in millimeters, with reference to the center of the faceplate is given by:

$$Z = A_1X^2 + A_2X^4 + A_3X^2Y^2 + A_5X^4Y^2 + A_6Y^4 + A_7X^2Y^4 + A_8X^4Y^4,$$

where X and Y are the distance coordinates, in millimeters, from the faceplate center along the major and minor axes, respectively, and where:

$$A_1 = -0.236424229 \times 10^{-4}$$
$$A_2 = -0.363538575 \times 10^{-8}$$
$$A_3 = -0.422441063 \times 10^{-3}$$
$$A_4 = -0.213537355 \times 10^{-8}$$
$$A_5 = +0.883912220 \times 10^{-13}$$
$$A_6 = -0.100020398 \times 10^{-9}$$
$$A_7 = +0.117915353 \times 10^{-14}$$
$$A_8 = +0.527722295 \times 10^{-21}$$

The picture tube faceplate defined by this formula has a relatively shallow curvature near the center of the faceplate, which increases near the edges along paths parallel to both the major and minor axes of the tube. The overall result is a faceplate of relatively flat appearance and with planar edges, namely, with points along the top, bottom, right and left edges located substantially in a common plane.

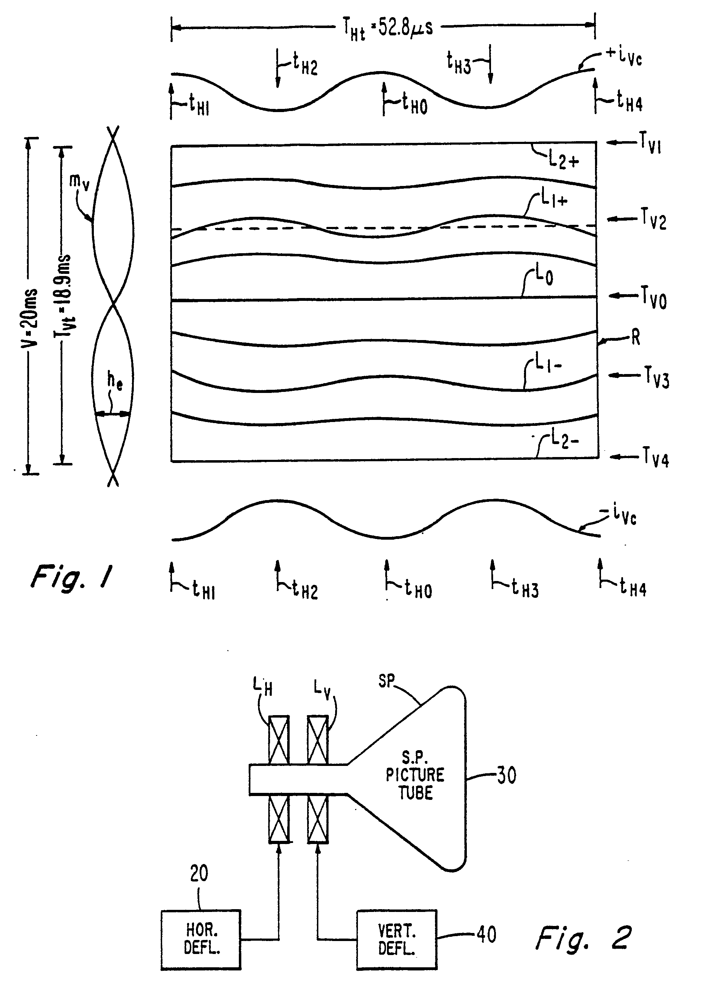

It is known in the prior art, for instance, from DE—A—2 010 814 and Telefunkensprecher No. 68 February 1976 pages 3—32, that when providing north-south pin cushion correction for picture tubes, it may be necessary to additionally modulate the deflection currents which cause deflection of the electron beams in the picture tubes in order to remove residual distortion in the pin cushion corrected scanning raster. However, in the flatter faceplate picture tubes with aspherical faceplate curvatures to which the present invention relates, there is a need for correction of anothe kind of geometrical raster distortion defined as "gullwing", illustrated by the raster lines of Figure 1. A cause of this distortion is the difference between the beam scanning radius of curvature and the tube faceplate radius of curvature as the electron beam scan a raster pattern.

In Figure 1, a raster area R is schematically represented by a rectangular box that encompasses the viewing area of faceplate 30 of a square-planar picture tube SP of Figure 2. Horizontal and vertical deflection circuits 20 and 40 of Figure 2 generate horizontal and vertical deflection currents in horizontal and vertical deflection windings $L_H$ and $L_V$, respectively. The horizontal and vertical deflection currents produce a pattern of scanned raster lines on faceplate 30.

Assuming that horizontal and vertical deflection circuits 20 and 40 correct for distortions such as east-west, north-south and S-distortion, the display of a pattern of horizontal raster scan lines on faceplate 30 is illustrated in Figure 1. The raster scan lines of Figure 1 exhibit a residual distortion identified as gullwing distortion.

In giving gullwing distortion, the vertical deviation of the electron beams scanning a given raster line, such as line $L_{1+}$, undergoes approximately two cycles of oscillation about their straight, dashed-line position in Figure 1. During the first half of the vertical trace interval, between time $T_{V1}$ and time $T_{V0}$, the vertical deviation of each raster line scan produces an upward excursion at intermediate points of a given line scan, near times $t_{H2}$ and $t_{H3}$ of the line trace interval, $T_{Ht}$. Maximum downward excursion of each raster line scan during the top half of vertical trace occurs at the beginning, center and end of each line scan, corresponding to times $t_{H1}$, $t_{H0}$ and $t_{H4}$, respectively.

Additionally, in giving gullwing distortion, the phase of the deviations of a given raster line switches by 180° when scanning from the top half of the raster to the bottom half of the raster. Thus, the phase of the deviations of raster line $L_{1-}$, scanned at vertical instant $T_{V3}$, is inverted in phase relative to the excursions of the corresponding raster line $L_{1+}$, scanned at vertical instant $T_{V2}$.

When horizontal and vertical deflection circuits 20 and 40 are used in raster scanning on faceplate 30 of square-planar picture tube SP of Figure 2, the effect of gullwing distortion on raster R of Figure 1 varies during the vertical trace interval $T_{Vt}$. Gullwing distortion is at a maximum for raster line scanned at times intermediate the center of vertical trace and the beginning or end of vertical trace. Thus, maximum gullwing distortion, or maximum deviation of a raster line, occurs when scanning raster lines $L_{1+}$ and $L_{1-}$ during vertical scan instants $T_{V2}$ and $T_{V3}$.

Minimum or no gullwing distortions of the raster scan lines is associated with line scanning at the top, center and bottom of the raster, when scanning raster lines $L_{2+}$, $L_0$ and $L_{2-}$, during vertical scan instants $T_{V1}$, $T_{V0}$ and $T_{V4}$, respectively.

In accordance with an aspect of the invention, gullwing distortion that tends to occur in conjunction with raster scanning of an aspherical faceplate picture tube is compensated by a correction circuit that modulates the field deflection current. The gullwing correction circuit is responsive to a first signal that repeats at a line rate and to a second signal that repeats at a field rate, for modulating the field deflection current during a line deflection period within the field deflection trace interval. The modulation is properly phased to correct the gullwing distortion.

In the drawing:

Figure 1 illustrates the raster pattern of gullwing distortion appearing on the aspherical faceplate of a square-planar picture tube;

Figure 2 illustrates in block diagram form raster scanning circuitry used in conjunction with raster scanning on the aspherical faceplate of a square-planar picture tube;

Figure 3 illustrates detailed embodiments of the horizontal and vertical deflection circuits of Figure 2, including circuitry embodying the invention that corrects for gullwing distortion;

Figures 4 and 5 illustrate waveforms associated with the operation of the circuitry of Figure 3;

Figure 6 illustrates the general application of the inventive suppressed carrier modulator of Figure 3;

Figure 7 illustrates waveforms associated with the operation of the circuit of Figure 6;

Figure 8 illustrates an alternate vertical deflection circuit, embodying the invention, that includes different arrangements for north-south pincushion distortion and gullwing distortion correction circuits; and

Figure 9 illustrates waveforms associated with the operation of the circuit of Figure 8.

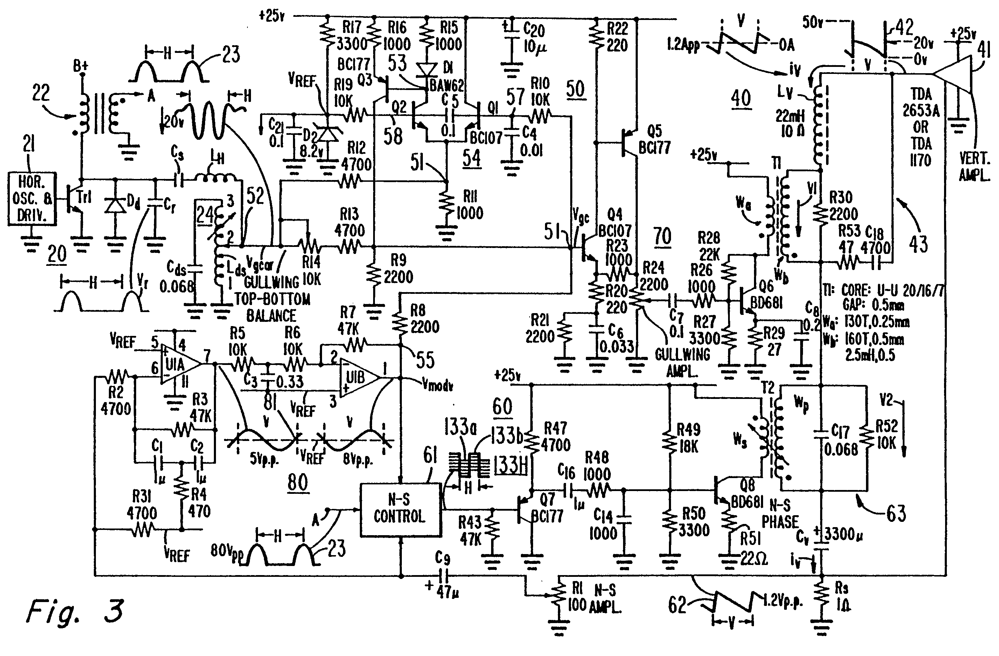

In the deflection circuitry illustrated in Figure 3, a vertical deflection circuit 40 includes a vertical deflection amplifier 41 that generates vertical deflection current $i_V$ in a vertical deflection winding $L_V$. A gullwing distortion correction circuit 70, embodying the invention, modulates vertical deflection current $i_V$ by applying a gullwing modulation voltage V1 to vertical deflection winding $L_V$. To provide north-south pincushion raster distortion correction, a north-south pincushion correction circuit 60 modulates vertical deflection current $i_V$ by applying to vertical deflection winding $L_V$ a north-south correction voltage V2. Vertical deflection current $i_V$ flows to ground via a coupling capacitor $C_V$ and a current sampling resistor $R_s$.

To correct gullwing raster distortion, gullwing correction circuit 70 modulates vertical deflection current $i_V$ during each line deflection period within the field deflection trace interval in the manner illustrated by the current $i_{vc}$, illustrated in Figure 1 by the two current waveforms $\pm i_{vc}$. Current $i_{vc}$ represents a line repetitive modulation component of the vertical deflection current wherein approximately two cycles of oscillation of modulation current $i_{vc}$ is developed during the line trace interval $T_{Ht}$.

To correct gullwing distortion of the raster lines, the modulation current component $i_{vc}$ is 180° out-of-phase with the oscillatory vertical deviations of the corresponding raster lines. Thus, for the lines scanned in the top half of the raster, such as raster line $L_{1+}$, modulation current component $+i_{vc}$ reaches its negative minima AC-wise near the line trace instants $t_{H2}$ and $t_{H3}$, and reaches its positive maxima near times $t_{H1}$, $t_{H0}$ and $t_{H4}$. For lines scanned in the bottom half of raster R, the modulation current component is the phase inverted current $-i_{vc}$, reaching maxima near times $t_{H2}$ and $t_{H3}$ and minima near times $t_{H1}$, $t_{H0}$ and $t_{H4}$.

In addition, to provide ideal gullwing distortion correction of a raster displayed on the aspherical faceplate of a square-planar picture tube, the amplitude envelope $m_V$ of modulation current component $i_{vc}$ is varied on envelope height $h_e$ during the vertical trace interval $T_{Vt}$ in the manner illustrated in Figure 1. The height of the modulation envelope undergoes approximately two cycles of oscillation, achieving maximum height near times $T_{V2}$ snf $T_{V3}$, corresponding to the scanning of raster lines $L_{1+}$ and $L_{1-}$. The modulation envelope reaches zero or near zero height near the center of vertical trace, time $T_{V0}$, when scanning raster line $L_0$ and near the top and bottom of the raster, near times $T_{V1}$ and $T_{V4}$, when scanning raster lines $L_{2+}$ and $L_{2-}$.

To generate modulation current component $i_{vc}$, having a modulation envelope $m_V$, gullwing correction circuit 70 includes a modulator stage 50 that generates a gullwing modulation voltage $V_{gc}$ at a modulator output terminal 51. Gullwing modulation voltage $V_{gc}$ is amplified in transistors $Q_4$ and $Q_5$ and coupled via a gullwing amplitude control potentiometer $R_{24}$ to an output transistor $Q_6$ advantageously operated in class A mode.

Primary winding $W_a$ of a gullwing transformer T1 is coupled to the collector of output transistor $Q_6$. Secondary winding $W_b$ of transformer T1 generates the gullwing correction voltage V1 that is applied to vertical deflection winding $L_V$ to modulate vertical deflection current $i_V$.

Capacitor $C_6$ coupled to the emitter of translator $Q_4$ and capacitor $C_8$ coupled to the emitter of transistor $Q_6$ enhance the high frequency response of gullwing correction circuit 70, resulting in an advance of gullwing correction voltage V1 compared to voltage $V_{gc}$. This compensates for the delay between correction voltage V1 and modulation current component $i_{vc}$ caused by the inductive load at transformer T1. The overall result is that current $i_{vc}$ is properly phased to provide gullwing correction.

Gullwing modulator stage 50, in accordance with an aspect of the invention, functions as a double balanced modulator that takes a line

repetitive carrier voltage $V_{gcar}$ and multiplies that voltage by a field repetitive voltage $V_{modv}$, produced by a vertical waveshaping circuit 80, to generate gullwing modulation voltage $V_{gc}$. Voltage $V_{gcar}$ is used to produce the gullwing modulation component $i_{vc}$, illustrated in Figure 1. Voltage $V_{modv}$ is used to produce the modulation envelope $m_V$ of Figure 1.

In accordance with a feature of the invention, the line repetitive voltage $V_{gcar}$ is derived from an LC resonant circuit 24, within horizontal deflection circuit 20, that is tuned to produce two cycles of resonant oscillation of current and voltage during the trace interval of the line deflection period. Additionally, LC resonant circuit 24 produces one cycle of oscillation during the horizontal retrace interval. Horizontal deflection circuit 20 includes a horizontal oscillator and driver 21, a horizontal output transistor Tr1, a damper didoe $D_d$, a retrace capacitor $C_r$ and the series arrangement of an S-shaping capacitor $C_s$, horizontal deflection winding $L_H$ and LC resonant circuit 24, comprising capacitor $C_{ds}$ and tapped inductor $L_{ds}$.

S-shaping capacitor $C_s$ is incapable of providing full correction of S-direction when a raster is being scanned on the aspherical faceplate of a square-planar picture tube. LC resonant circuit 24 is tuned to a resonance period of one-half the horizontal trace interval or a resonance frequency of illustratively 38 kilohertz when the horizontal trace interval is 52.6 microsecond in duration. LC resonant circuit 24 applies voltage $V_{gcar}$ to horizontal deflection winding $L_H$ to modify the waveshape of the line deflection current in a manner that corrects for residual S-distortion. The operation of LC resonant circuit 24 is more fully described in U.S. Patent Application, Serial No. 716,685 filed March 27, 1985, entitled, S-Corrected Deflection Circuit, by P. E. Haferl.

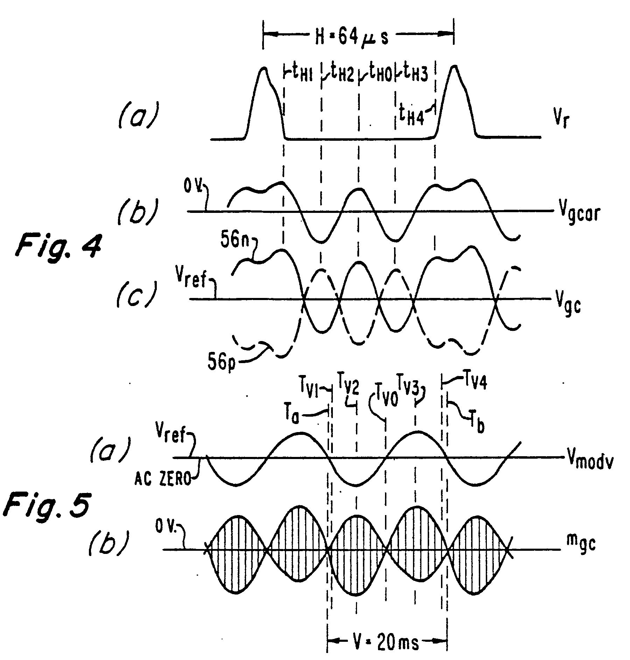

Voltage $V_{gcar}$ is illustrated in Figure 4b; a reference horizontal retrace pulse voltage $V_r$ is illustrated in Figure 4a. The phasing of voltage $V_{gcar}$ relative to horizontal retrace pulse voltage $V_r$ is such as to produce during the line trace interval, time $t_{H1}$ through time $t_{H4}$, two cycles of oscillation such that waveform maxima occur at times $t_{H1}$, $t_{H0}$ and $t_{H4}$ and waveform minima occur at times $t_{H2}$ and $t_{H3}$.

Voltage $V_{gcar}$ is applied to a carrier signal input terminal of modulator stage 50. Voltage $V_{modv}$ is coupled to an amplitude modulation signal input terminal 55 of modulator 50. Voltage $V_{modv}$ modulates voltage $V_{gcar}$ to produce the suppressed carrier amplitude modulated gullwing correction voltage $V_{gc}$ at modulator output terminal 51.

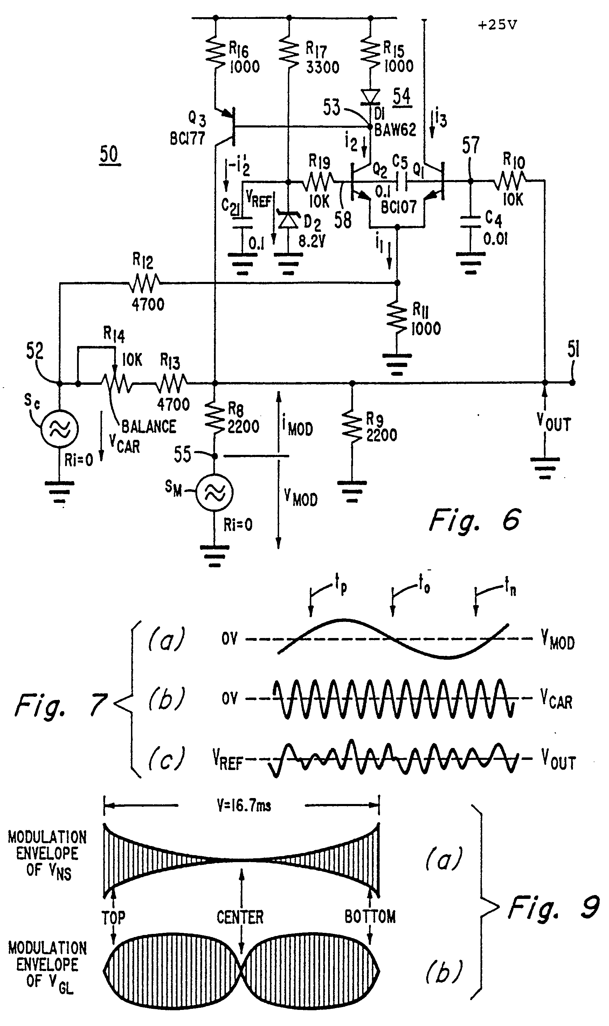

In accordance with another inventive feature, vertical waveshaping circuit 80 develops an approximately sinusoidal waveshape, vertical modulation voltage $V_{modv}$, illustrated in Figure 5a. To obtain sinusoidal voltage $V_{modv}$, the vertical sawtooth voltage 62 developed across sampling resistor $R_s$ is applied via a potentiometer R1 and a DC blocking capacitor $C_9$ to the inverting input terminal of an operational amplifier U1A. Amplifier U1A operates as a double integrator. The output signal of amplifier U1A is a vertical rate, third order S-shaped waveform 81 that is coupled via an RC network to the inverting input terminal of an operational amplifier U1B for generating the voltage $V_{modv}$. Resistor $R_5$ and capacitory $C_3$ of the RC network provide some delay of signal 81 to enable voltage $V_{modv}$ to be properly centered, with a zero crossing near the center of the vertical trace interval, time $T_{V0}$ of Figure 5a.

Vertical modulation voltage $V_{modv}$, illustrated in Figure 5a, developed at modulation input terminal 55 of suppressed carrier modulation stage 50 modulates the gullwing carrier frequency voltage $V_{gcar}$, illustrated in Figure 4b, that is developed at carrier input terminal 52 to develop at output terminal 51 modulated gullwing correction voltage $V_{gc}$, illustrated in the line rate time scale of Figure 4c.

Despite the top half of raster scanning, prior to the center of field trace instant $T_{V0}$ of Figure 5a, when modulation voltage $V_{modv}$ is negative, AC-wise, gullwing correction voltage $V_{gc}$ represents gullwing carrier frequency voltage $V_{gcar}$ of Figure 4b but inverted in phase. Thus, during the top half of vertical scan, voltage $V_{gc}$, during each line period, is represented by dashed-line waveform 56p of Figure 4c. Gullwing correction voltage $V_{gc}$ waveform 56p undergoes to cycles of oscillation during the line trace interval $t_{H1}$ through $t_{H4}$ and is of the proper phase, given the relative winding polarities of windings $W_a$ and $W_b$, to enable gullwing correction circuit 70 to generate the gullwing correction current $+i_{vc}$ of Figure 1.

During the bottom half of raster scanning after time $T_{V0}$ of Figure 5a, when modulation voltage $V_{modv}$ is positive, gullwing correction voltage $V_{gc}$ is in phase with voltage $V_{gcar}$ and is represented by solid-line voltage waveform 56n of Figure 4c. The oscillation of voltage waveform 56n corresponds closely to the phase inverted oscillation of gullwing correction current $-i_{vc}$ of Figure 1.

Vertical modulation voltage $V_{modv}$ amplitude modulates gullwing correction voltage $V_{gc}$ to produce a modulation envelope $m_{gc}$ of the correction voltage, as illustrated in Figure 5b. The line repetitive portion of the voltage $V_{gc}$ is schematically illustrated in Figure 5b by the closely spaced vertical line segments. The height or envelope separation of gullwing modulation envelope $m_{gc}$ undergoes two cycles of oscillation within the vertical deflection interval, time $T_a$ through time $T_b$, reaching zero envelope height near the center of vertical trace near time $T_{V0}$, and reaching near zero envelope height at the beginning and end of vertical trace near times $T_{V1}$ and $T_{V4}$, respectively.

The vertical rate amplitude modulation of modulation envelope $m_{gc}$ enables gullwing correction circuit 70 to produce a vertical rate modulation envelope $m_V$ of the gullwing correction current $i_{vo}$ of Figure 1 that closely corresponds to and is in-phase with the modulation envelope $m_{gc}$ of Figure 5b.

Because modulator stage 50 of Figure 3 functions as a suppressed carrier modulator, the phase of gullwing correction voltage $V_{gc}$ switches 180° near the center of vertical trace from the phase represented by waveform 56p to the phase represented by waveform 56n. This phase change enables gullwing correction circuit 70 to concurrently change the phase of gullwing correction current $i_{vc}$ at the center of vertical trace, from $+i_{vc}$ to $-i_{vc}$, as is required for proper gullwing distortion correction.

In accordance with an aspect of the invention, north-south pincushion correction of vertical deflection current $i_v$ is provided by a north-south pincushion correction circuit 60 that operates in conjunction with gullwing correction circuit 70. Pincushion correction circuit 60 generates north-south modulation voltage V2 that is applied in series with gullwing modulation voltage V1 to vertical deflection winding $L_v$. North-south modulation voltage V2 is a line frequency, sinusoidal voltage, phased by correction circuit 60 to have a zero crossing near the center of the horizontal trace interval. The amplitude envelope of line frequency voltage V2 is made to vary at a vertical rate in a generally sawtooth manner, having maximum envelope height near the top and bottom of the raster and zero height near the center.

To produce north-south modulation voltage V2, control circuit 61 is responsive to a line rate signal, retrace pulse voltage 23 developed by a flyback transformer 22, and a field rate signal, vertical sawtooth voltage 62. Control circuit 61 generates a line rate, bilevel, square-wave control voltage 133H. North-south pincushion correction circuit 60, including a detailed embodiment of north-south control circuit 61, is described in detail in U.S. Patent Application Serial No. 719,227, filed April 2, 1985, entitled North-South Pincushion Corrected Deflection Circuit, by P. E. Haferl.

North-south control circuit 61 varies the amplitude levels 133a and 133b of line rate control voltage 133H at a vertical rate in a sawtooth manner, with level 133a varying in the opposite sense of the level 133b. North-south control voltage 133H is coupled via a buffer transistor $Q_7$ to the base of a power amplifier $Q_8$ operated in the class A mode. Transistor $Q_8$ is coupled to the primary winding $W_s$ of a north-south transformer T2. The secondary winding $W_p$ of transformer T2 is coupled in series with the secondary winding $W_b$ of gullwing transformer T1 and vertical deflection winding $L_v$. Secondary winding $W_p$ of north-south transformer T2 and a capacitor $C_{17}$ form an LC resonant circuit 63 that is tuned to the line frequency.

In response to line rate, square-wave voltage 133H, power amplifier $Q_8$ excites resonant circuit 63 into oscillation at the line rate to generate the line frequency north-south modulation voltage V2 that is applied to vertical deflection voltage $L_v$. The amplitude envelope variation of voltage V2 at a vertical rate in a generally sawtooth manner is accomplished in accordance with the vertical rate variation of the levels 133a and 133b of control signal 133H.

The sinusoidal nature of north-south modulation voltage V2 advantageously assists the gullwing distortion correction circuit 70 in providing the proper degree of gullwing correction. Sinewave, north-south modulation voltage V2, when applied to vertical deflection winding $L_v$, generates a cosine north-south correction current component to field deflection current $i_v$ that is phase shifted by 90° from voltage V2. Thus, with respect to line scanning instants $t_{H1}$ through $t_{H4}$ of Figure 1, the north-south correction current component of vertical deflection current $I_v$ reaches maxima magnitude at the center of horizontal trace at time $t_{H0}$.

The cosine correction current, in addition to substantially correcting north-south pincushion distortion, also assists in correcting gullwing distortion. The north-south correction current changes its polarity at the zero crossings of the cosine current, near time $t_{H2}$ and $t_{H3}$ in Figure 1. This change in polarity of the north-south correction current has an aiding effect to the correction provided by gullwing correction current component $i_{vc}$ of Figure 1.

As previously mentioned, the faceplate of a square-planar picture tube is aspherical. The faceplate curvature is relatively shallow near the center of the faceplate and increases near the edges along paths parallel to both the major and minor axes. The edges of the faceplate are nearly planar, with points along the top, bottom, right and left edges substantially located in a common plane. When providing north-south pincushion correction in conjunction with raster scanning on the aspherical faceplate of a square-planar picture tube, a linear sawtooth north-south modulation envelope leaves a residual north-south pincushion distortion, wherein, for example, too much correction amplitude is provided around the center of the raster and too little correction is provided at the top and bottom. North-south pincushion correction circuit 60 corrects such residual distortion by nonlinearly waveshaping the vertical rate correction envelope.

In accordance with an aspect of the invention, the modulation voltage $V_{modv}$ generated by vertical waveshaping circuit 80, in addition to being coupled to gullwing correction circuit 70, is also coupled to north-south control circuit 61 to nonlinearly waveshape the north-south correction current envelope. Although not shown in Figure 3, in north-south control circuit 61, vertical rate voltage $V_{modv}$ is algebraically added to vertical rate sawtooth voltage 62 for producing a vertical rate variation of levels 133a and 133b of north-south control voltage 133H. As explained in the aforementioned Haferl U.S. Application Serial No. 719,227, control circuit 61 processes the superposed voltages to provide an envelope variation that results in a slight compression of the envelope height at the lower correction current amplitudes, when scanning the center lines of the raster, and a slight expansion of the envelope height at the higher correction current amplitudes, when scanning the top and bottom lines of the raster. This provides substantial compensation of residual north-south pincushion error in a square-planar picture tube.

Because vertical deflection amplifier 41 may exhibit significant output impedance at the line frequency, the line rate modulation of vertical deflection current $i_v$ produced by north-south pincushion correction circuit 60 tends to develop a line rate component in output voltage 42 of vertical deflection amplifier 41. Integrated circuit vertical deflection amplifiers may not permit the use of a sufficiently large supply voltage to avoid producing voltage limiting effects. The result may be a nonlinear drive at the top and bottom of field scan.

To avoid voltage limiting effects, vertical deflection winding $L_v$ is tuned to approximately the line frequency by a capacitor $C_{18}$ and a damping resistor $R_{53}$ placed in parallel with the series combination of vertical deflection winding $L_v$ and secondary winding $W_b$ of gullwing transformer T1. In this arrangement, the line rate north-south correction current circulates within the tuned circuit. Because the impedance of tuned circuit 43 is relatively high at the line frequency, less line rate voltage appears at the output terminal of vertical deflection amplifier 41. The inductance of gullwing transformer T1 must be included in tuned circuit 43 because the gullwing correction current frequency is different from the line frequency.

To provide both north-south pincushion and gullwing correction, modulation voltages V2 and V1 are superposed before being applied to vertical deflection winding $L_v$. This superposition is accomplished by series coupling Lc resonant tuned circuit 63 of transformer T2 with secondary winding $W_b$ of gullwing transformer T1.

LC resonant tuned circuit 63 is advantageously used to generate the sinusoidal north-south modulation voltage V2 because of the large voltage amplitudes needed to correct the relatively large pincushion distortion that exists in a 27V square-planar picture tube. The north-south component of vertical deflection current $i_v$ may illustratively be 10% of the deflection current, whereas the gullwing component may only be 2%. The north-south voltage V2 may reach a peak magnitude of around 80 volts, whereas the gullwing voltage V1 may only reach a peak magnitude of around 18 volts.

In accordance with a feature of the invention, secondary winding $W_b$ of gullwing transformer T1 represents a linear impedance at a main constituent frequency of gullwing modulation voltage V1, such as at the approximately double line frequency of 38 kilohertz. By maintaining the impedance of winding $W_b$ linear in the frequency region about 38 kilohertz, undesirable interaction between gullwing transformer T1 and tuned circuit 61 of north-south transformer 72 is avoided. Since the voltage amplitude required for gullwing modulation V1 to provide proper amounts of gullwing correction is substantially less than that required by north-south modulation voltage V2, one may advantageously choose to tune transformer T2 rather than transformer T1 to generate the associated modulation voltage. Thus, a capacitor, such as capacitor $C_{17}$, is provided for tuning north-south transformer T2 to substantially the line frequency; whereas no tuning element is provided that is capable of tuning gullwing transformer T1 at the gullwing modulation frequency of approximately double line frequency.

The operation of suppressed carrier modulation stage 50 will now be described in detail. Modulator stage 50 may be advantageously used, not only in a gullwing correction circuit but also in other applications. Suppressed carrier modulators may find applications in areas that require one or more of the following: simplicity, stability, low cost, linear operation from DC, absence of wound components and avoidance of output filtering. Suppressed carrier modulator stage 50 combines the above features in a simple circuit using only three transistors and two diodes. As an application example, modulator 50 may be used in low frequency multipliers.

Figure 6 illustrates suppressed carrier modulator 50 for the general case where the carrier voltage is a sinusoidal voltage $V_{CAR}$ developed by an ideal carrier voltage source $S_C$. Similarly, the modulation voltage is a lower frequency sinusoidal voltage $V_{MOD}$ devloped by an ideal modulation voltage source $S_M$. Suppressed carrier modulator 50 of Figure 6 includes a differential amplifier 54 comprising differentially connected transistors $Q_1$ and $Q_2$, and an inverting transistor $Q_3$ which provides negative feedback to a first input terminal 57 of differential amplifier 54 at the base of transistor $Q_1$.

To explain modulator operation, assume both voltage sources $S_C$ and $S_M$ are absent, with modulator input terminals 52 and 55 being grounded. In accordance with an inventive feature, in such a situation, differential amplifier 54 is balanced by the action of the negative feedback through transistor $Q_3$. The negative feedback from transistor $Q_3$ to input terminal 57 at the base of differential transistor $Q_1$ maintains the voltage at input terminal 57 at the reference voltage level of differential amplifier input terminal 58, at the base of transistor $Q_2$. By selecting base resistors $R_{10}$ and $R_{19}$ of equal value, the modulator output voltage $V_{OUT}$ at terminal 51 is maintained at the reference voltage $V_{REF}$ of zener diode $D_2$ in the balanced condition.

The emitter current, or differential amplifier bias current, $i_1$, of differentially connected transistors $Q_1$ and $Q_2$ divides into currents $i_2$ and $i_3$ in the collectors of transistors $Q_2$ and $Q_1$, respectively. The collector current of inverting transistor $Q_3$ mirrors, in amplitude, current $i_2$ but is inverted in phase. The collector current of transistor $Q_3$ flows as a current $-i'_2$ towards output terminal 51. Diode $D_1$ compensates for the temperature drift of the voltage across the base-emitter electrodes of transistor $Q_3$.

Assume now that carrier voltage source $S_C$ is coupled to terminal 52 and develops at the terminal a sinusoidal carrier voltage $V_{CAR}$, illustrated in Figure 7b. Assume that input terminal 55 is still grounded. Carrier current developed by voltage $V_{CAR}$ flows as a component in resistor $R_{12}$ to the common junction terminal of the emitters of differentially connected transistors $Q_1$ and $Q_2$. This carrier current component is reflected as in-phase components in collector currents $i_2$ and $i_3$ and is inverted by transistor $Q_3$ to produce an inverted carrier current component in current $-i'_2$.

The inverted carrier current component of current $-i'_2$ is algebraically summed at terminal 51 with a noninverted carrier current component flowing via balance poteniometer $R_{14}$ and resistor $R_{13}$. By proper adjustment of potentiometer $R_{14}$, complete carrier current cancellation at terminal 51 is obtained. Since terminal 51 is the modulator output terminal at which voltage $V_{OUT}$ is developed, carrier current cancellation is equivalent to complete carrier voltage suppression at output terminal 51, in the balanced state of modulator 50.

Modulation voltage $V_{MOD}$, illustrated in Figure 7a, unbalances differential amplifier 54. The DC voltage at terminal 51 remains substantially constant by action of negative feedback current $-i_2'$ which varies inversely proportional to current $i_{MOD}$. The unbalance of currents $i_2$ and $i_3$ is also proportional to current $i_{MOD}$. As a result, the carrier current components of currents $i_2$ and $-i'_2$ vary inversely proportional to current $i_{MOD}$. When voltage $V_{MOD}$ is positive and increasing, such as occurs near time $t_p$ of Figure 7, the negative feedback loop reduces current $-i'_2$ below its balanced DC level in accordance with the amplitude of voltage $V_{MOD}$. A reduction in current $-i'_2$ includes a reduction in the magnitude of the inverted carrier current component. The noninverted carrier component flowing via potentiometer $R_{14}$ and resistor $R_{13}$ is no longer cancelled by the inverted carrier current component from transistor $Q_3$. A noninverted carrier current thus appears at modulator output terminal 51 as a modulated carrier frequency output voltage $V_{OUT}$ having an amplitude that varies in accordance with the amplitude variation of voltage $V_{MOD}$.

Negative going changes of voltage $V_{MOD}$ when the voltage $V_{MOD}$ is negative, such as occur near time $t_n$ of Figure 7, have the opposite effect and result in an increase of the inverted carrier current component of current $-i'_2$.

The result of this modulation process on voltage $V_{OUT}$ is illustrated in Figure 7c which shows voltage $V_{OUT}$ as an amplitude modulated suppressed carrier voltage. When voltage $V_{MOD}$ of Figure 7a is zero, near time $t_0$, the carrier portion of voltage $V_{OUT}$ is suppressed.

The negative feedback loop via differential amplifier 54 and transistor $Q_3$ substantially suppresses the appearance of the baseband frequency of modulation voltage $V_{MOD}$ at output terminal 51 at all amplitude levels of the modulation voltage. The small amount of modulation voltage required to modulate the base current of transistor $Q_2$ is relatively insignificant and may be neglected from consideration.

The negative feedback loop, however, does not significantly suppress the carrier portion of voltage $V_{OUT}$. A bypass capacitor $C_4$ reduces the voltage $V_{OUT}$ at terminal 57. A capacitor $C_5$ is advantageously coupled between the two input terminals 57 and 58 of differential amplifier 54. The value of capacitor $C_5$ is selected to provide a substantially short circuited path between terminals 57 and 58 at frequencies around that of carrier voltage $V_{CAR}$. Because differential amplifier 54 exhibits a high common mode rejection, the development of a carrier current at output terminal 51, when voltage $V_{MOD}$ unbalances modulator 50, is not adversely affected by the simultaneous appearance of carrier current at input terminal 57.

Nevertheless, some common mode carrier feedback is produced when voltage $V_{MOD}$ unbalances modulator 50, because the voltage at terminals 57 and 58 modulates, by a small amount, current $i_1$ and the superimposed carrier current component. This may be improved by replacing resistor $R_{11}$ by a transistor arrangement operating as a current source. Resistor $R_{12}$ is then connected in a suitable way to the control terminal of this transistor current source to modulate current $i_1$ by voltage $V_{CAR}$. The frequency range and maximum available output voltage $V_{OUT}$ are significantly increased. The result is that not all of the carrier current flowing in resistor $R_{12}$ passes through transistor $Q_1$ and $Q_2$ as collector currents $i_2$ and $i_3$.

In contrast to other suppressed carrier modulators circuits, modulator 50 operates in a linear manner. Modulator output voltage $V_{OUT}$ remains undistorted, thereby avoiding the necessity of lowpass filtering of the output voltage or of providing a second harmonic tap at output terminal 51. Another advantage of modulator 50 is that the carrier frequency may be varied during operation without degrading the modulation. Thus, even when the carrier frequency is not a pure sinusoidal wave, the modulated output voltage remains undegraded. These advantages are derived in part from the fact that the modulation is produced by the linear process of adding at terminal 51 a variable amount of inverted carrier signal to the noninverted carrier signal.

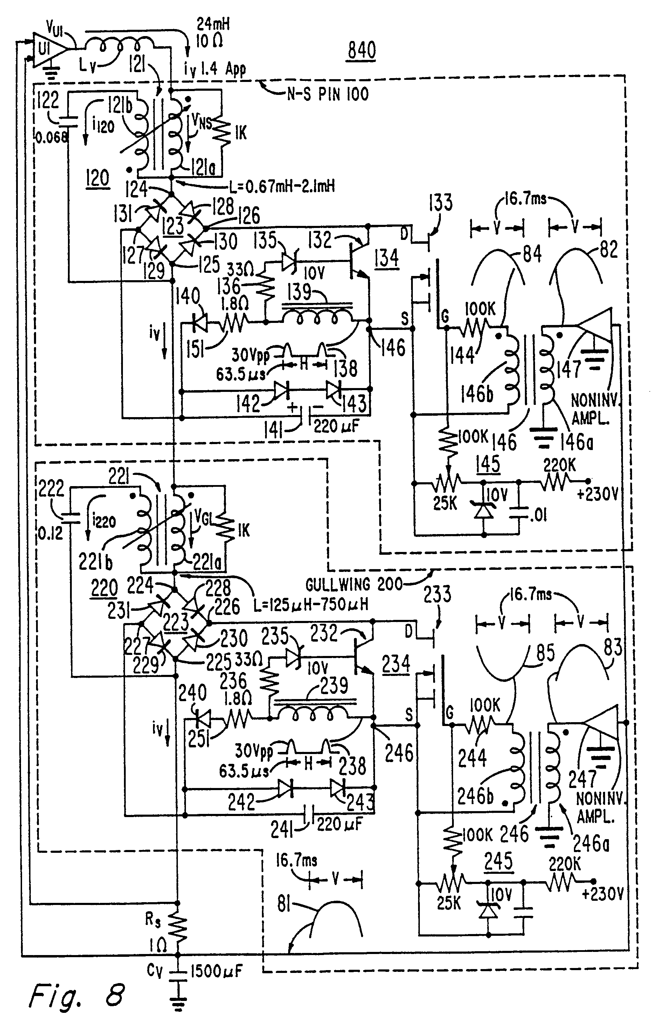

Figure 8 illustrates an alternative vertical deflection circuit 840, embodying the invention, that includes different arrangements for north-south pincushion distortion and gullwing distortion correction circuits. Such circuitry may be used when large amounts of gullwing correction is required. In Figure 8, a vertical deflection amplifier U1, of conventional design, applies a vertical output voltage $V_{U1}$ to a vertical deflection winding $L_V$ for generating a vertical deflection current $i_V$. A north-south pincushion correction circuit 100 generates a north-south pincushion correction voltage $V_{NS}$ across a winding 121a of a north-south transformer 121. A gullwing correction circuit 200 generates a gullwing correction voltage $V_{GL}$ across a winding 221a of a gullwing transformer 221. The two modulation voltages, $V_{NS}$ and $V_{GL}$, are applied in series to vertical deflection winding $L_V$ for modulating vertical deflection current $i_V$ in accordance with the two modulation voltages, thereby providing north-south pincushion distortion and gullwing distortion correction of the scanned raster in a square-planar picture tube. After flowing from gullwing correction circuit 200, vertical deflection current $i_V$ flows to ground via a sampling resistor $R_s$ and a coupling capacitor $C_V$.

North-south pincushion correction circuit 100 includes north-south transformer 121, having winding 121a coupled to a terminal 124 of a diode steering bridge circuit 123 and having a winding 121b coupled to a resonant capacitor 122 for forming a series resonant circuit 200, coupled between bridge terminal 124 and bridge terminal 125. Series resonant circuit 120 is tuned to approximately the line frequency.

A north-south modulator current switch 134, comprising a bipolar transistor 132 and a field effect transistor 133 is coupled between bridge terminal 126 and bridge terminal 127. The connection from bridge terminal 127 to the junction terminal 146 of the emitter electrode of transistor 132 and the source electrode of transistor 133 is provided alternatively during horizontal retrace and horizontal trace by the branch path of a relatively large valued capacitor 141 during horizontal retrace, and during horizontal trace by the series connection of a horizontal flyback transformer secondary winding 139, a small valued resistor 139 and a diode 140.

Transformer 132 is switched at a line rate by a retrace pulse voltage 138 developed across horizontal flyback transformer secondary winding 139, with retrace pulse voltage 138 being positive during horizontal retrace at terminal 146. A zener diode 135 and a resistor 136 limit the base current and reverse base voltage of transistor 132.

Conduction in field effect transistor 133 is varied at a vertical rate in a parabolic manner by a vertical rate control voltage 84 coupled to the gate electrode of the transistor. Parabolic control voltage 84 is generated from a parabolic voltage 81, developed across coupling capacitor $C_V$. Parabolic voltage 81 is amplified by a noninverting amplifier 147 to apply an in-phase parabolic voltage 82 to the dotted terminal of primary winding 146a of a control transformer 146. The dotted terminal of transformer secondary winding 146b is coupled to the gate electrode of field effect transistor 133 via a resistor 144. The undotted terminal of secondary winding 146b is coupled to the source electrode. Bias for the gate electrode is provided by a DC bias source 145.

The relative winding polarities of windings 146a and 146b are such as to produce a parabolic control voltage 84 that is in-phase with voltage 81 of coupling capacitor $C_V$. Thus parabolic voltage 84 achieves maximum amplitude near the center of vertical scan and minimum amplitude near the top and bottom of vertical scan.

To describe operation of north-south pincushion correction circuit 100, assume that the top of the raster is being scannned and that a positive vertical deflection current $i_V$ flows into the dotted terminal of winding 121a of north-south transformer 121. During the horizontal retrace interval of a given line scan, retrace pulse voltage 138 reverse biases the base-emitter junction of bopolar transistor 132, cutting off collector conduction.

Vertical deflection current $i_V$, flowing out of the undotted terminal of winding 121a divides into two current branches. A first branch path for vertical deflection current $i_V$ is via north-south transformer winding 121b and capacitor 122 of series resonant circuit 120. A second branch path for vertical deflection current $i_V$ is via current steering diode 128 of diode bridge 123, the drain-to-source current path of field effect transistor 133, capacitor 141 and steering diode 129. The two branch currents of vertical deflection current $i_V$ recombine at the dotted terminal of gullwing transformer winding 221a.

During horizontal retrace, the portion of vertical deflection current $i_V$ that flows in series resonant circuit 120 stores energy in north-south transformer winding 121b and in capacitor 122. The amount of current flowing and energy stored in series resonant circuit 120 is inversely related to the magnitude of vertical deflection current $i_V$ that branches from the undotted terminal of winding 121a to field effect transistor 133. In accordance with an aspect of the invention, by controlling the conductivity of field effect transistor 133, the amount of current in series resonant circuit 120 is controlled in a inverse manner.

During the horizontal trace interval, horizontal pulse voltage 138 forward biases the base-emitter junction of bipolar transistor 132 producing saturated collector conduction. Saturated conduction in transistor 132 provides a substantial short circuit path, via the transistor between diode bridge terminals 126 and 127 via the short circuit path of horizontal flyback transformer winding 138, low valued resistors 139 and diose 140.

With terminals 126 and 127 short circuited to one another, series resonant circuit 120 undergoes current and voltage oscillation at its resonant frequency of approximately the line frequency. A sinusoidal voltage is developed across north-south transformer winding 121b that is transformer coupled to winding 121a and applied to vertical deflection winding $L_V$ as the voltage $V_{NS}$, for generating a cosinusoidal correction current component to vertical deflection current $i_V$. Adjusting the inductance of north-south transformer 121 adjusts the phasing and frequency of the oscillation to produce a maximum cosinusoidal correction current at the center of the horizontal trace interval.

The amplitude of the resonant oscillation during horizontal trace is a function of the amount of energy stored in series resonant circuit 120 during the previous horizontal retrace interval. Since the amount of energy stored is inversely related to the conduction of field effect transistor 133, proper amplitude modulation of north-south pincushion correction voltage $V_{NS}$ is provided by applying vertical rate parabolic control voltage 84 to the gate electrode of field effect transistor 133. Parabolic voltage 84 is maximum at the center of vertical trace and is near minimum at the top and bottom of vertical trace. Because of the inverse relationship between conduction in field effect transistor 133 and the amplitude of north-south pincushion correction voltage $V_{NS}$, the modulation envelope of voltage $V_{NS}$, illustrated in Figure 9a, is near maximum envelope height at the top and bottom of the raster and is zero height near the center of the raster. The use of a parabolic control voltage for north-south correction provides additional envelope waveshaping that further increases envelope height near the top and bottom of the raster to produce a better north-south envelope waveform when raster scanning the faceplate of a square-planar picture tube.

During the bottom half of raster scan, when vertical deflection current $i_V$ is negative, current steering diodes 130 and 131 of diode bridge 123 conduct, during the horizontal retrace interval, the branch of vertical deflection current $i_V$ that flows in field effect transistor 133. When vertical deflection current $i_V$ is negative, the current $i_{120}$ that flows in series resonant circuit 120 during the horizontal retrace interval, flows from capacitor 122 to the undotted terminal of north-south transformer winding 121b, a current direction that is opposite that of the direction taken during the top half of raster scan. Thus, during the bottom half of raster scan, the phase of north-south pincushion correction voltage $V_{NS}$ is switched by 180° from the phase that the voltage takes during the top half of raster scan.

Diode 140, coupled in series with a current limiting resistor 139, rectifies retrace plus voltage 138 during the horizontal trace interval to develop a voltage across capacitor 141 equal in magnitude to the two diode voltage drops that are produced by diodes 142 and 143 when these two diodes are conducting. The two diode voltage drop thereby produced between terminals 127 and 146 compensates for the two diode voltage drop developed between terminals 124 and 125 during diode bridge conduction that tends to cause vertical deflection current distortion near the center of vertical trace.

Gullwing correction circuit 200 is designed similarly to north-south pincushion correction circuit 100, using similar elements and operating in a similar fashion. Gullwing circuit 200 includes a gullwing transformer 221 having a winding 221a in which vertical deflection current $i_V$ flows, a current steering, diode bridge 223, a series resonant circuit 220, comprising gullwing transformer winding 221b and a resonant capacitor 222, coupled between bridge terminals 224 and 225, and a gullwing modulator current switch 234, comprising a bipolar transistor 232 and a field effect transistor 233.

During horizontal retrace, retrace pulse voltage 238 reverse biases the base-emitter junction of bipolar transistor 232, cutting off collector conduction. Vertical deflection current $i_V$ divides into two branches at the undotted terminal of gullwing transformer winding 221a and recombines at current sampling resistor $R_s$. Vertical deflection current $i_V$ flows in a first branch including field effect transistor 233 and in a second branch, including in series resonant circuit 220. The amount of current flowing and energy stored in series resonant circuit 200 is inversely related to the conduction of field effect transistor 233.

During the subsequent horizontal trace interval, retrace pulse voltage 238 forward biases transistor 232 into saturated collector conduction, initiating a resonant oscillation in series resonant circuit 220 at the resonant frequency of approximately double line frequency. Approximately two oscillations of current and voltage are produced during the horizontal trace interval in gullwing transformer winding 221b. The oscillatory voltage across winding 221b is transformer coupled to winding 221a as the approximately double line rate, oscillatory gullwing correction voltage $V_{GL}$ that is applied to vertical deflection winding $L_V$. Oscillatory voltage $V_{GL}$ generates a generally sinusoidal gullwing correction current component in vertical deflection winding $i_V$ at approximately at the double line rate. The inductance of transformer 221 is adjusted to provide the proper gullwing correction current component frequency and to properly phase the gullwing correction current component within the horizontal trace interval.

To provide accurate gullwing correction from the top of raster scan to the bottom of raster scan, the modulation envelope of gullwing correction voltage $V_{GL}$ should ideally be near zero height not only when scanning the center raster lines but also when scanning both the top and bottom raster lines, as illustrated in Figure 9b. Maximum modulation envelope height of gullwing correction voltage $V_{GL}$ should ideally occur at points intermediate the center and top or bottom of the raster scan.

To provide the gullwing modulation envelope waveshape illustrated in Figure 9b, wherein the height of the modulation envelope undergoes substantially two cyles of oscillation during the vertical deflection interval, a gullwing correction control voltage 85 is applied to the gate electrode of field effect transistor 233 to vary, in accordance with the control voltage, the transistor conductivity. Control voltage 85 is a vertical rate parabola waveform derived from the vertical rate parabola voltage 81 developed across coupling capacitor $C_V$ and applied to noninverting amplifier 247 that generate a noninverted parabolic output voltage 83. Voltage 83 is applied to the dotted terminal of primary winding 246a of control transformer 246 to generate parabola voltage 85.

The winding polarity of transformer secondary winding 246b is such as to invert the phase of parabola 85 relative to the phase parabola 81. This results in the phase of parabola 85 also being inverted relative to the phase of parabola 84 of north-south pincushion correction circuit 100. Thus, parabolic gullwing control voltage 85 is of minimum amplitude at the center of vertical scan and near maximum amplitude near the top and bottom of vertical scan. Parabolic gullwing control voltage 85 is advantageously used to vary the conduction of field effect transistor 233 in a parabolic manner. Maximum transistor conduction is achieved at the top and bottom of vertical scan and minimum conduction is achieved at the center of vertical scan.

Maximum conduction of field effect transistor 233 at the top and bottom of vertical scan results in minimum vertical deflection current flowing in series resonant circuit 220 during the corresponding horizontal retrace intervals that occur near those vertical scan instants. With minimum current flowing and energy stored in series resonant circuit 220 at the top and bottom of vertical scan, the current and voltage oscillation in series resonant circuit 220 during the corresponding horizontal trace intervals are minimum, as is required for gullwing correction. Near the center of vertical scan, conduction in field effect transistor 233 is at a minimum. However, because north-south pincushion corrected vertical deflection current $i_v$ is zero at the center of vertical scan, no current flows into series resonant circuit 220 to produce resonant oscillation. Thus, the modulation envelope of gullwing correction voltage $V_{GL}$ is also zero at the center of vertical scan, as is required for proper gullwing distortion correction.

During the bottom half of raster scan, when vertical deflection current $i_v$ is negative, current steering diodes 230 and 231 of diode bridge 223 conduct, during the horizontal retrace interval, the branch of vertical deflection current $i_v$ that flows in field effect transistor 233. When vertical deflection current $i_v$ is negative, the current $i_{220}$, that flows in series resonant circuit 220 during the horizontal retrace interval, flows from capacitor 222 to the dotted terminal of gullwing transformer winding 221b, a current direction that is opposite that of the direction taken during the top half of raster scan. Thus, during the bottom half of raster scan, the phase of gullwing correction voltage $V_{GL}$ is switched by 180° from the phase that the voltage takes during the top half of raster scan.

## Claims

1. Picture tube display apparatus, comprising:
a picture tube having a phosphor screen;
line and field deflection circuits for generating line and field deflection currents in respective line and field deflection windings to scan a raster on said phosphor screen; and
means for correcting raster distortion by modulation of said deflection currents,
. characterized in that, with said picture tube having an aspherical faceplate (30) of relatively flat contour, the raster distortion correction means includes gullwing distortion correction means (70) which is responsive to a first signal ($V_{gcar}$) repeating at a line rate and to a second signal ($V_{modv}$) repeating at a field rate, and which in operation modulates said field deflection current ($i_v$) during a line deflection period within the field deflection trace interval in a manner that produces correction of gullwing distortion which the aspherical shape of the faceplate tends to cause in the corresponding raster scan line.

2. Apparatus according to Claim 1 characterized in that said gullwing distortion correction means (70) modulates said field deflection current ($i_v$) to produce approximately two cycles of modulation during said line deflection interval.

3. Apparatus according to Claim 2 characterized in that said gullwing distortion correction means (70) varies the modulation envelope ($M_{gc}$) of said field deflection current in a manner that produces approximately two cycles of oscillation of the envelope height within said field deflection trace interval.

4. Apparatus according to Claim 1 characterized in that said gullwing distortion correction means (70) includes a suppressed carrier modulator (50) for developing a gullwing correction voltage ($V_{gc}$) that is applied to said field deflection circuit (40) and that is representative of the modulation of the line rate repetitive first signal by the field rate repetitive second signal.

5. Apparatus according to Claim 4 characterized in that said gullwing distortion correction means (70) includes a transformer (T1) with a first winding ($W_a$) having said correction voltage developed thereacross and with a second winding ($W_b$) coupled to said field deflection winding ($L_v$).

6. Apparatus according to Claim 5 characterized by an amplifier (Q6) having an output coupled to said transformer first winding ($W_a$) and being responsive to an output of said suppressed carrier modulator (50).

7. Apparatus according to Claim 1 characterized in that said gullwing distortion correction means (70) comprise means (54) for generating a gullwing correction output voltage ($V_{gc}$) that is representative of the modulation of the line rate repetitive first signal ($V_{gcar}$) by the field rate repetitive second signal ($V_{modv}$) and a gullwing transformer (T1) having said output voltage applied to a first winding ($W_a$) thereof and having a second winding ($W_d$) coupled to said field deflection winding ($L_v$).

8. Apparatus according to Claim 7 characterized by a north-south pincushion correction circuit (60) comprising a north-south control circuit (61) for generating a north-south correction output voltage and a north-south transformer (T2) having said north-south correction output voltage applied to a first winding ($W_s$) thereof and having a second winding ($W_p$) coupled to said field deflection winding ($L_v$).

9. Apparatus according to Claim 8 characterized in that said north-south correction output voltage includes an approximately line rate constituent frequency, and said gullwing correction output voltage includes an approximately double line rate constituent frequency, and wherein said north-south correction circuit (60) includes means

($C_{17}$) for tuning said north-south transformer (T2) to said approximately line rate constituent frequency, whereas said gullwing transformer (T1) remains untuned at said approximately double line rate constituent frequency.

10. Apparatus according to Claim 1 characterized in that said second signal ($V_{modv}$) comprises an oscillatory signal at said field rate phased to produce near zero amplitude at the top, bottom and center of field scan.

11. Apparatus according to Claim 10 characterized in that said first signal ($V_{gcar}$) comprises an approximately double line rate signal.

12. Apparatus according to Claim 1 characterized by means for generating said first signal ($V_{gcar}$) comprising an LC resonant circuit (24) coupled to said line deflection winding ($L_H$) and tuned to produce approximately two complete cycles of voltage oscillation during the line trace interval.

13. Apparatus according to Claim 12 characterized in that said LC resonant circuit (24) undergoes approximately one cycle of voltage oscillation during the line retrace interval.

14. Apparatus according to Claim 12 characterized in that said gullwing distortion correction means includes a modulator (50) for developing an output voltage that is applied to said field deflection circuit (40) and that is representative of the modulation of said first signal ($V_{gcar}$) by said second signal ($V_{modv}$).

15. Apparatus according to Claim 14 characterized in that said second signal ($V_{modv}$) comprises an oscillatory signal at said field rate phased to produce near zero amplitude at the top, bottom and center of field scan.

16. Apparatus according to Claim 4 characterized by first (24) and second (80) voltage generating means for generating said first ($V_{gcar}$) and second ($V_{modv}$) signals as first and second signal voltages, respectively, and wherein said suppressed carrier modulator (50) comprises a differential amplifier (54), means coupled to said first voltage generator (24) and to said differential amplifier (54) for controlling the amplifier bias current in accordance with said line rate repetitive first signal voltage, means ($R_{14}$) for forming a negative feedback path between a differential amplifier output terminal (51) and a differential amplifier input terminal (55) and including means ($Q_3$) for generating an inverted amplifier output voltage that is representative of an amplifier input voltage, and means for superposing said inverted amplifier output voltage and said first and second signal voltages to generate said gullwing correction voltage.

17. Apparatus according to Claim 16 characterized by a source ($D_2$) of reference voltage coupled to said differential amplifier (54), said negative feedback path maintaining said differential amplifier in a balanced state in accordance with said reference voltage.

18. Apparatus according to Claim 17 characterized in that said superposing means provides cancellation of the line rate repetitive first signal voltage portion of said gullwing correction voltage when said differential amplifier is in said balanced state.

19. Apparatus according to Claim 18 characterized in that said field rate repetitive second signal voltage unbalances said differential amplifier to develop said line rate repetitive first signal voltage portion of said gullwing correction voltage that is modulated in accordance with the amplitude of said field rate repetitive second signal voltage.

20. Apparatus according to Claim 16 or 19 characterized in that said negative feedback path includes means for applying said gullwing correction voltage to said first input terminal (57) of said differential amplifier and a capacitor ($C_5$) coupled to said first input terminal (57) and to a second input terminal (58) of said differential amplifier (54) to provide said differential amplifier with common mode rejection of the line rate repetitive first signal voltage portion of said gullwing correction voltage.

21. Apparatus according to Claim 1 characterized in that said gullwing distortion correction means comprises an inductance (221) coupled to said field deflecting winding ($L_v$), a resonating capacitance (222) coupled to said inductance (221) for forming a resonant circuit (220) tuned to approximately double the line frequency, and a controllable switch (234) coupled to said inductance (221) and responsive to a line rate switch control signal (238) and to said field rate repetitive second signal (85) for producing conduction in said switch (234), during the line retrace interval of said line deflection period, that varies in accordance with said field rate repetitive first signal.

22. Apparatus according to Claim 21 characterized in that a portion of said field deflection current ($i_v$) flows in said resonant circuit (120) in an inverse relationship to the conductivity of said controllable switch (134) during said line retrace interval.

23. Apparatus according to Claim 22 characterized in that said controllable switch (134) comprises a first controllable current element (132) operated only at a line rate and a second controllable current element (133) operated only at a field rate.

24. Apparatus according to Claim 21 characterized in that said controllable switch (134) produces oscillation of said resonant circuit during the line trace interval that is modulated in accordance with said field rate repetitive second signal to produce substantially no oscillation near the beginning and end of said field deflection trace interval.

25. Apparatus according to Claim 24 characterized in that a portion of said field deflection current ($i_v$) flows in said resonant circuit in an inverse relationship to the conductivity of said controllable switch (134) during said line retrace interval.

26. Apparatus according to Claim 24 characterized in that said field rate repetitive second signal is of substantially parabolic waveshape.

27. Apparatus according to Claim 21 characterized by a north-south pincushion distortion correction means (100) coupled to said field deflection winding (L_v) and responsive to field line rate north-south control signals for modulating said field deflection current (L_v) during a line deflection period within the field deflecting trace interval in a manner that produces north-south pincushion distortion correction of the corresponding raster line.

28. Apparatus according to Claim 27 characterized in that both said field rate repetitive second signal and said field rate north-south control signal are of substantially parabolic waveshape.

29. Apparatus according to Claim 27 characterized in that said north-south pincushion distortion correction means (100) comprises an inductance (121) coupled to said field deflection winding (L_v), a resonating capacitance (122) coupled to said inductance (121) for forming a resonant circuit (120) tuned to approximately the line frequency, and a controllable switch (134) coupled to said inductance (121) and responsive to said field and line rate north-south correction signals for producing conduction in said switch, during the line retrace interval of said line deflection period, that varies in accordance with said field rate north-south correction signal.

30. Apparatus according to Claim 29 characterized in that both said field rate repetitive second signal and said field rate north-south control signals are of substantially parabolic waveshape.

**Patentansprüche**

1. Bildröhrensichtgerät, bestehend aus:
einer Bildröhre mit einem Leuchtstoffschirm;
Zeilen- und Vertikalablenkschaltungen zur Erzeugung von Zeilen- und Vertikalablenkströmen in jeweils einer Zeilen- und einer Vertikalablenkwicklung zur Abtastung eines Rasters auf dem Leuchtstoffschirm; und
einer Einrichtung zum Korrigieren von Rasterverzerrung durch Modulation der besagten Ablenkströme,
dadurch gekennzeichnet, daß, während die Bildröhre eine asphärische Frontplatte (30) mit relativ flacher Kontur hat, die Rasterverzerrungs-Korrektureinrichtung eine Möwenflügelverzerrungs-Korrektureinrichtung (70) enthält, die auf ein sich mit einer Zeilenfrequenz wiederholendes erstes Signal (V_gcar) und ein sich mit einer Vertikalfrequenz wiederholendes zweites Signal (V_modv) anspricht und im Betrieb den Vertikalablenkstrom (i_v) während einer Zeilenablenkperiode innerhalb des Vertikalablenkungs-Hinlaufintervalls in einer Weise moduliert, welche eine Korrektur der Möwenflügel-Verzerrung herbeiführt, welche die asphärische Form der Frontplatte in der entsprechenden Rasterabtastteile zu verursachen trachtet.

2. Gerät nach Anspruch 1, dadurch gekennzeichnet, daß die Möwenflügelverzerrungs-Kor-

rektureinrichtung (70) den Vertikalablenkstrom (i_v) so moduliert, daß ungefähr zwei Modulationsperioden während des Zeilenablenkintervalls erzeugt werden.

3. Gerät nach Anspruch 2, dadurch gekennzeichnet, daß die Möwenflügelverzerrungs-Korrektureinrichtung (70), die Modulationshüllkurve (M_gc) des Vertikalablenkstroms in einer solchen Weise moduliert, daß ungefähr zwei Schwingungsperioden der Hüllkurvenhöhe innerhalb des Vertikalablenkungs-Hinlaufintervalls erzeugt werden.

4. Gerät nach Anspruch 1, dadurch gekennzeichnet, daß die Möwenflügelverzerrungs-Korrektureinrichtung (70) einen trägerunterdrückenden Modulator (50) enthält, um eine Möwenflügel-Korrekturspannung (V_gc) zu erzeugen, die an die Vertikalablenkschaltung (40) gelegt ist und die repräsentativ für die Modulation des sich mit Zeilenfrequenz wiederholenden ersten Signals durch das sich mit der Vertikalfrequenz wiederholende zweite Signal ist.

5. Gerät nach Anspruch 4, dadurch gekennzeichnet, daß die Möwenflügelverzerrungs-Korrektureinrichtung (70) einen Transformator (T1) mit einer ersten Wicklung (W_a) enthält, längs der die besagte Korrekturspannung entwickelt wird, und mit einer zweiten Wicklung (W_b), die mit der Vertikalablenkwicklung (L_v) gekoppelt ist.

6. Gerät nach Anspruch 5, gekennzeichnet durch einen Verstärker (Q6), der einen mit der ersten Wicklung (W_a) des Transformators gekoppelten Ausgang hat und auf einen Ausgang des trägerunterdrückenden Modulators (50) anspricht.

7. Gerät nach Anspruch 1, dadurch gekennzeichnet, daß die Möwenflügelverzerrungs-Korrektureinrichtung (70) eine Einrichtung (54) aufweist zur Erzeugung einer Möwenflügelkorrektur-Ausgangsspannung (V_gc), die repräsentativ für die Modulation des sich mit Zeilenfrequenz wiederholenden ersten Signals (V_gcar) durch das sich mit Vertikalfrequenz wiederholende zweite Signal (V_modv) ist, sowie einen MöwenflügelTransformator (T1), dem die besagte Ausgangsspannung an einer ersten Wicklung W_a) angelegt wird und der eine mit der Vertikalablenkwicklung (L_v) gekoppelte zweite Wicklung (W_b) hat.

8. Gerät nach Anspruch 7, gekennzeichnet durch eine Nord-Süd-Kissenkorrekturschaltung (60), die eine Nord-Süd-Steuerschaltung (61) zur Erzeugung einer Nord-Süd-Korrekturausgangsspannung und einen Nord-Süd-Transformator (T2) enthält, dem an einer ersten Wicklung (W_a) die Nord-Süd-Korrekturausgangsspannung engelegt wird und der eine mit der Vertikalablenkwicklung (L_v) gekoppelte zweite Wicklung (W_p) hat.

9. Gerät nach Anspruch 8, dadurch gekennzeichnet, daß die Nord-Süd-Korrekturausgangsspannung eine ungefähr zeilenfrequente Frequenzkomponente hat und daß Möwenflügel-Korrekturausgangsspannung eine ungefähr doppeltzeilenfrequente Frequenzkomponente hat, und wobei die Nord-Süd-Korrekturschaltung (60) eine Einrichtung (C_17) zur Abstimmung des Nord-Süd-Transformators (T2) auf die ungefähr zeilenfrequente Frequenzkomponente enthält, während der Möwenflügel-Transformator (T1) bei der besagten ungefähr doppelt-zeilenfrequenten Komponentfrequenz unabgestimmt bleibt.

10. Gerät nach Anspruch 1, dadurch gekennzeichnet, daß das besagte zweite Signal ($V_{modv}$) ein mit der Vertikalfrequenz schwingendes Signal ist, dessen Phase so liegt, daß es am oberen Ende, am unteren Ende und in der Mitte der Vertikalabtastung eine Amplitude von nahe Null hat.

11. Gerät nach Anspruch 10, dadurch gekennzeichnet, daß das besagte erste Signal ($V_{gcar}$) aus einem ungefähr doppelt-zeilenfrequenten Signal besteht.

12. Gerät nach Anspruch 1, dadurch gekennzeichnet, daß eine zur Erzeugung des besagten ersten Signals ($V_{gcar}$) vorgesehene Einrichtung einen LC-Resonanzkreis (24) aufweist, der mit der Zeilenablenkwicklung ($L_H$) gekoppelt und so abgestimmt ist, daß er während des Zeilenhinlaufintervalls ungefähr zwei vollständige Perioden einer Spannungsschwingung erzeugt.

13. Gerät nach Anspruch 12, dadurch gekennzeichnet, daß der LC-Resonanzkreis (24) während des Zeilenrücklaufintervalls ungefähr eine Spannungsschwingungsperiode durchmacht.

14. Gerät nach Anspruch 12, dadurch gekennzeichnet, daß die Möwenflügelverzerrungs-Korrektureinrichtung einen Modulator (50) zur Entwicklung einer Ausgangsspannung enthält, die an die besagte Vertikalablenkschaltung (40) gelegt wird und die repräsentativ für die Modulation des besagten ersten Signals ($V_{gcar}$) durch das besagte zweite Signal ($V_{modv}$) ist.

15. Gerät nach Anspruch 14, dadurch gekennzeichnet, daß das besagte zweite Signal ($V_{modv}$) ein mit der Vertikalfrequenz schwingendes Signal ist, dessen Phase so liegt, daß es am oberen Rand, unteren Rand und in der Mitte der Vertikalabtastung eine Amplitude nahe Null liefert.

16. Gerät nach Anspruch 4, gekennzeichnet durch eine erste (24) und eine zweite (80) Spannungserzeugungseinrichtung zur Erzeugung des besagten ersten ($V_{gcar}$) und zweiten ($V_{modv}$) Signals als erste bzw. zweite Signalspannung, und wobei der trägerunterdrückende Modulator (50) folgendes aufweist: einen Differenzverstärker (54), eine mit dem ersten Spannungserzeuger (24) und dem Differenzverstärker (54) gekoppelte Einrichtung zur Steuerung des Verstärker-Vorstroms entsprechend der sich mit Zeilenfrequenz wiederholenden ersten Signalspannung, eine Einrichtung ($R_{14}$) zur Bildung eines Gegenkopplungsweges zwischen einer Differenzverstärker-Ausgangsklemme (51) und einer Differenzverstärker-Eingangsklemme (55) und mit einer Einrichtung ($Q_3$) zur Erzeugung einer invertierten Verstärker-Ausgangsspannung, die repräsentativ für eine Verstärker-Eingangsspannung ist, und eine Einrichtung zur überlagerung der invertierten Verstärker-Ausgangsspannung und der besagte ersten und zweiten Signalspannung, um die Möwenflügel-Korrekturspannung zu erzeugen.

17. Gerät nach Anspruch 16, gekennzeichnet durch eine Referenzspannungsquelle ($D_2$), die mit dem Differenzverstärker (54) gekoppelt ist, wobei der Gegenkopplungsweg den Differenzverstärker in einem symmetrierten Zustand entsprechend der Referenzspannung hält.

18. Gerät nach Anspruch 17, dadurch gekennziechnet, daß die überlagerungseinrichtung eine Auslöschung des dem sich mit Zeilenfrequenz wiederholenden ersten Signal entsprechenden Spannungsteils der Möwenflügel-Korrekturspannung bewirkt, wenn der Differenzverstärker im symmetrierten Zustand ist.

19. Gerät nach Anspruch 18, dadurch gekennzeichnet, daß die sich mit Vertikalfrequenz wiederholende zweite Signalspannung den Differenzverstärker außer Symmetrie bringt, um den sich mit Zeilenfrequenz wiederholenden ersten Signalspannungsteil der Möwenflügel-Korrekturspannung zu entwickeln, der entsprechend der Amplitude der sich mit Vertikalfrequenz wiederholenden zweiten Signalspannung moduliert ist.

20. Gerät nach Anspruch 16 oder 19, dadurch gekennzeichnet, daß der Gegenkopplungsweg eine Einrichtung zum Anlegen der Möwenflügel-Korrekturspannung an die erste Eingangsklemme (57) des Differenzverstärker und einen Kondensator ($C_5$) enthält, der mit der besagten ersten Eingangsklemme (57) und mit der einer zweiten Eingangsklemme (58) des Differenzverstärker (54) gekoppelt ist, um eine Gleichtaktunterdrückung des sich mit Zeilenfrequenz wiederholenden ersten Signalspannungsteils der Möwenflügel-Korrekturspannung im Differenzverstärker zu bewirken.

21. Gerät nach Anspruch 1, dadurch gekennziechnet, daß die Möwenflügel-Korrektureinrichtung eine mit der Vertikalablenkwicklung ($L_v$) gekoppelte Induktivität (221), einen mit dieser Induktivität (221) gekoppelten Resonanzkondensator (222) zur Bildung eines auf ungefähr die doppelte Zeilenfrequenz abgestimmten Resonanzkreises und einen steuerbaren Schalter (234) enthält, der mit der besagten Induktivität (221) gekoppelt ist und auf ein zeilenfrequentes Schaltersteuersignal (238) und auf das sich mit Vertikalfrequenz wiederholende zweite Signal (85) anspricht um während des Zeilenrücklaufintervalle der Zeilenablenkperiode im Schalter (234) eine Leitfähigkeit hervorzurufen, die sich entsprechend dem sich mit Vertikalfrequenz wiederholen ersten Signal ändert.

22. Gerät nach Anspruch 21, dadurch gekennzeichnet, daß ein Teil des Vertikalablenkstroms ($i_v$) im besagten Resonanzkreis (120) in einer inversen Beziehung zur Leitfähigkeit des steuerbaren Schalters (134) während des Zeilenrücklaufintervalls fließt.

23. Gerät nach Anspruch 22, dadurch gekennzeichnet, daß der steuerbare Schalter (134) ein erstes, nur mit Zeilenfrequenz betriebenes Stromsteuerelement (132) und ein zweites, nur mit Vertikalfrequenz betriebenes Stromsteuerelement (133) aufweist.

24. Gerät nach Anspruch 21, dadurdh gekennzeichnet, daß der steuerbare Schalter (134) während des Zeilenhinlaufintervalle eine Schwingung des besagten Resonanzkreises hervorruft, die entsprechend dem sich mit Vertikalfrequenz wiederholenden zweiten Signal moduliert ist, derart, daß nahe dem Beginn und dem Ende des Vertikalablenkungs-Hinlaufintervalls im wesentlichen keine Schwingung erzeugt wird.

25. Gerät nach Anspruch 24, dadurch gekennzeichnet, daß ein Teil des Vertikalablenkstroms ($i_v$) im Resonanzkreis in einer inversion Beziehung zur Leitfähigkeit des steuerbaren Schalters (134) während des Zeilenrücklaufintervalls fließt.

26. Gerät nach Anspruch 24, dadurch gekennzeichnet, daß das sich mit Vertikalfrequenz wiederholende zweite Signal im wesentlichen parabolische Wellenform hat.

27. Gerät nach Anspruch 21, gekennzeichnet durch eine Nord-Süd-Kissenverzerrungs-Korrektureinrichtung (100), die mit der besagten Vertikalablenkwicklung ($L_v$) gekoppelt ist und auf vertikalfrequente und zeilenfrequente Nord-Süd-Steuersignale anspricht, um den Vertikalablenkstrom ($L_v$) während einer Zeilenablenkperiode innerhalb des Vertikalablenkungs-Hinterlaufintervalls in einer Weise zu modulieren, die zur Korrektur der Nord-Süd-Kissenverzerrung der entsprechenen Rasterteile führt.

28. Gerät nach Anspruch 27, dadurch gekennzeichnet, daß sowohl das sich mit Vertikalfrequenz wiederholende zweite Signal als auch das vertikalfrequente Nord-Süb-Steuersignal im wesentlichen parabolische Wellenform haben.

29. Gerät nach Anspruch 27, dadurch gekennziechnet, daß die Nord-Süb-Kissenverzerrung-Korrektureinrichtung (100) eine mit der Vertikalablenkwicklung ($L_v$) gekoppelte Induktivität (121), einen mit dieser Induktivität (121) gekoppelten Resonanzkondensator (122) zur Bildung eines auf ungefähr die Zeilenfrequenz abgestimmten Resonanzkreises (120) und einen steuerbaren Schalter (134) enthält, der mit der besagten Induktivität (121) gekoppelt ist und auf die vertikal- und zeilenfrequenten Nord-Süd-Korrektursignale anspricht, um während des Zeilenrücklaufintervalls der Zeilenablenkperiode im besagten Schalter eine Leitfähigkeit hervorzurufen, die sich entsprechend dem teilbildfrequenten Nord-Süd-Korrektursignal ändert.

30. Gerät nach Anspruch 29, dadurch gekennzeichnet, daß sowohl das sich mit Vertikalfrequenz wiederholende zweite Signal als auch das teilbildfrequente Nord-Süd-Steuersignal im wesentlichen parabolische Wellenform haben.

## Revendications

1. Appareil de visualisation à tube-image, comprenant:

un tube-image ayant écran de luminophores;

des circuits de déviation horizontale et verticale pour produire des courants de déviation horizontale et verticale dans des enroulements respectifs de déviation horizontale et verticale pour explorer une trame sur ledit écran de luminophores;

un moyen pour corriger les distortions de la trame par modulation desdits courants de déviation,

caractérisé en ce que, avec le tube-image ayant un écran asphérique (30) de contour relativement plat, le moyen de correction de distorsion de la trame comprend un moyen de correction de distortion en aile de moutte (70) qui répond à un premier signal ($V_{gcar}$) récurrent à une fréquence horizontale et à un second signal ($V_{modv}$) récurrent à une fréquence verticale et qui, en fonctionnement, module ledit courant de déviation verticale ($i_v$) pendant une période de déviation horizontale dans l'intervalle d'aller de déviation verticale d'une manière qui produit une correction de la distortion en aile de mouette que la forme asphérique de l'écran a tendance à provoquer dans la ligne de balayage correspondante.

2. Appareil selon la revendication 1, caractérisé en ce que ledit moyen de correction de distorsion en aile de moutte (70) module ledit courant de déviation verticale ($i_v$) pour produire à peu près deux cycles de modulation pendant ledit intervalle de déviation horizontale.

3. Appareil selon la revendication 2, caractérisé en ce que ledit moyen de correction de distorsion en aile de moutte (70) change l'envelope de modulation ($M_{gc}$) dudit courant de déviation verticale d'une manière qui produit à peu près deux cycles d'oscillation de la hauteur de l'envelope pendant ledit intervalle d'aller de déviation verticale.

4. Appareil selon la revendication 1, caractérisé en ce que ledit moyen de correction de distorsion en aile de moutte (70) comprend un modulateur à porteuse supprimée (50) pour développer une tension de correction d'aile de mouette ($V_{gc}$) qui est appliquée audit circuit de déviation verticale (40) et qui est représentative de la modulation du premier signal récurrent à la fréquence de ligne par le second signal récurrent à la fréquence de trame.

5. Appareil selon la revendication 4, caractérisé en ce que ledit moyen de correction de distorsion en aile de mouette (70) comporte un transformateur (T1) et un premier enroulement ($W_a$) à travers lequel est développée la tension de correction et un second enroulement ($W_b$) couplé audit enroulement de déviation verticale ($L_v$).

6. Appareil selon la revendication 5, caractérisé par un amplificateur (Q6) don la sortie est couplée audit premier enroulement ($W_a$) du transformateur et qui répond à une sortie dudit modulateur (50) à porteuse supprimée.

7. Appareil selon la revendication 1, caractérisé en ce que ledit moyen de correction de distorsion en aile de mouette (70) comprend un moyen (54) pour produire une tension de sortie ($V_{gc}$) de correction d'aile de mouette qui est représentative de la modulation du premier signal récurrent à la fréquence horizontale ($V_{gcar}$) par le second signal récurrent à la fréquence verticale ($V_{modv}$) et un transformateur d'aile de mouette (T1) dont la tension de sortie est appliquée à son premier enroulement ($W_a$) et qui a un second enroulement

($W_b$) couplé audit enroulement de déviation verticale ($L_v$).

8. Appareil selon la revendication 7, caractérisé par un circuit de correction de coussinet nord-sud (60) comprenant un circuit de contrôle nord-sud (61) pour produire un circuit de contrôle nord-sud (T2) ayant la tension de sortie de correction nord-sud appliquée à son premier enroulement ($W_s$) et ayant un second enroulement ($W_p$) couplé audit enroulement de déviation verticale ($L_v$).

9. Appareil selon la revendication 8, caractérisé en ce que ladite tension de sortie de correction nord-sud comporte une fréquence constituant à peu près la fréquence horizontale et ladite tension de sortie de correction en aile de mouette comporte une fréquence constituant à neu près le double de la fréquence horizontal et en ce que ledit circuit de correction nord-sud (60) comporte un moyen ($C_{17}$) pour accorder ledit transformateur nord-sud (T2) à ladite fréquence constituant à peu près la fréquence horizontale tandis que ledit transformateur d'aile de mouette (T1) reste non accordé à ladite fréquence constituant à peu près le double de la fréquence horizontale.

10. Appareil selon la revendication 1, caractérisé en ce que ledit second signal ($V_{modv}$) comprend un signal oscillant à ladite fréquence horizontale en phase pour produire une amplitude presque nulle au haut, au bas et au centre du balayage vertical.

11. Appareil selon la revendication 10, caractérisé en ce que ledit premier signal ($V_{gcar}$) comprend un signal à peu près au double de la fréquence horizontale.

12. Appareil selon la revendication 1, caractérisé par un moyen pour produire ledit premier signal ($V_{gcar}$) comprenant un circuit résonnant LC (24) couplé audit enroulement de déviation horizontale ($L_H$) et accordé pour produire à peu près deux cycles complets d'oscillation de tension pendant l'intervalle d'aller horizontal.

13. Appareil selon la revendication 12, caractérisé en ce que ledit circuit résonnant LC (24) subit à peu près un cycle d'oscillation de tension pendant l'intervalle de retour horizontal.

14. Appareil selon la revendication 12, caractérisé en ce que ledit moyen de correction de distorsion en aile de mouette comporte un modulateur (50) pour développer une tension de sortie qui est appliquée audit circuit de déviation horizontale (40) et qui est représentative de la modulation dudit premier signal ($V_{gcar}$) per ledit second signal ($V_{modv}$).

15. Appareil selon la revendication 14, caractérisé en ce que ledit second signal ($V_{modv}$) comprend un signal oscillant à ladite fréquence horizontale en phase pour produire une amplitude presque nulle en haut, en bas et au centre du balayage vertical.

16. Appareil selon la revendication 14, caractérisé par des premier (24) et second (80) moyens générateurs de tension pour produire lesdits premier ($V_{gcar}$) et second ($V_{modv}$) signaux en tant que première et seconde tensions de signal, respectivement, et en ce que ledit modulateur à porteuse supprimée (50) comprend un amplificateur différential (54), un moyen couplé audit premier générateur de tension (24) et audit amplificateur différentiel (54) pour contrôler le courant de polarisation de l'amplificateur selon ladite première tension de signal recurrente à la fréquence horizontale, un moyen ($R_{14}$) pour former un trajet de contre-réaction négative entre une borne de sortie (51) de l'amplificateur différentiel et un borne d'entrée (55) de l'amplificateur différentiel et comportant un moyen ($Q_3$) pour produire une tension de sortie inversée de l'amplificateur, qui est représentative d'une tension d'entrée de l'amplificateur, et un moyen pour superposer ladite tension de sortie inversée de l'amplificateur et lesdites première et seconde tensions de signal afin de produire ladite tension de correction d'aile de mouette.

17. Appareil selon la revendication 16, caractérisé par une source ($D_2$) de tension de référence couplée audit amplificateur différentiel (54), ledit trajet de contre-réaction négative maintenant ledit amplificateur différentiel à un état équilibré selon ladite tension de référence.

18. Appareil selon la revendication 17, caractérisé en ce que ledit moyen de superposition produit l'annulation de la première portion de tension de signal récurrente à la fréquence horizontale de ladite tension de correction d'aile de mouette lorsque ledit amplificateur différentiel est audit état équilibré.

19. Appareil selon la revendication 18, caractérisé en ce que ladite seconde tension de signal récurrente à la fréquence verticale déséquilibre ledit amplificateur différentiel pour développer ladite portion de la première tension de signal récurrente à la fréquence horizontale de ladite tension de correction d'aile de mouette qui est modulée selon l'amplitude de la seconde tension de signal récurrente à la fréquence verticale.

20. Appareil selon la revendication 16 ou 19, caractérisé en ce que ledit trajet de contre-réaction négative comporte un moyen pour appliquer ladite tension de correction d'aile de mouette à ladite première borne d'entrée (57) dudit amplificateur différentiel et un condensateur ($C_5$) couplé à ladite première borne d'entrée (57) et à une seconde borne d'entrée (58) dudit amplificateur différentiel (54) pour appliquer audit amplificateur différentiel un rejet en mode commun de la première portion de tension de signal, récurrente à la fréquence horizontale, de ladite tension de correction d'aile de mouette.

21. Appareil selon la revendication 1, caractérisé en ce que ledit moyen de correction de distorsion en aile de mouette comporte un inductance (221) couplée audit enroulement de déviation verticale ($L_v$), une capacité résonnante (222) couplée à ladite inductance (221) pour former un circuit résonnant (220) accordé à neu près sur le double de la fréquence horizontale et un commutateur réglable (234) couplé à ladite inductance (221) et répondant à un signal de commande de commutateur à la fréquence horizontale (238) et audit second signal (85) récurrent à la fréquence verticale pour produire la conduction dans ledit commutateur (234), pendant l'intervalle de retour horizontal de ladite période de déviation horizontale, qui varie selon ledit premier signal récurrent à la fréquence verticale.

22. Appareil selon la revendication 21, caractérisé en ce qu'une portion dudit courant de déviation verticale ($i_v$) s'écoule dans ledit circuit résonant (120) en relation inverse avec la conductivité dudit commutateur réglable (134) pendant ledit intervalle de retour horizontal.

23. Appareil selon la revendication 22, caractérisé en ce que ledit commutateur réglable (134) comprend un premier élément de courant réglable (132) ne fonctionnant qu'à une fréquence horizontale et un second élément de courant réglable (133) ne fonctionnant qu'à une fréquence verticale.

24. Appareil selon la revendication 21, caractérisé en ce que ledit commutateur réglable (134) produit une oscillation dudit circuit résonnant pendant l'intervalle d'aller horizontal, qui est modulée selon ledit second signal récurrent à la fréquence verticale, pour ne produire sensiblement aucune oscillation à proximité du début et de la fin dudit intervalle d'aller de déviation verticale.

25. Appareil selon la revendication 24, caractérisé en ce qu'une portion dudit courant de déviation verticale ($i_v$) s'écoule dans ledit circuit résonnant en relation inverse avec la conductivité dudit commutateur réglable (134) pendant ledit intervalle de retour horizontal.

26. Appareil selon la revendication 24, caractérisé en ce que ledit second signal récurrent à la fréquence horizontale est de forme sensiblement parabolique.

27. Appareil selon la revendication 21, caractérisé par un moyen de correction de distorsion en coussinet nord-sud (100) couplé audit enroulement de déviation verticale ($L_v$) et répondant aux signaux de contrôle nord-sud à la fréquence verticale et horizontale pour moduler ledit courant de déviation verticale ($L_v$) pendant une période de déviation horizontale dans l'intervalle d'aller de déviation verticale d'une manière produisant une correction de distorsion en coussinet nord-sud de la la ligne de trame correspondante.

28. Appareil selon la revendication 27, caractérisé en ce que le second signal récurrent à la fréquence verticale et le signal de contrôle nord-sud à la fréquence verticale sont tous deux de forme d'onde sensiblement parabolique.

29. Appareil selon la revendication 27, caractérisé en ce que ledit moyen de correction de distorsion en coussinet nord-sud (100) comprend une inductance (121) couplée audit enroulement de déviation verticale ($L_v$), une capacité résonnante (122) couplée à ladite inductance (121) pour former un circuit résonnant (120) accordé à peu près sur la fréquence horizontale et un commutateur réglable (134) couplé à ladite inductance (121) et répondant auxdits signaux de correction nord-sud à la fréquence verticale et horizontale pour produire une conduction dans ledit commutateur, pendant l'intervalle de retour horizontal de ladite période de déviation horizontale, qui varie selon ledit signal de correction nord-sud à la fréquence verticale.

30. Appareil selon la revendication 29, caractérisé en ce que le second signal récurrent à la fréquence verticale et le signal de contrôle nord-sud à la fréquence verticale sont tous deux de forme d'onde sensiblement parabolique.

Fig. 1

Fig. 2

Fig. 3

EP 0 185 082 B1

Fig. 4

(a) $V_r$

(b) $V_{gcar}$

(c) $V_{gc}$

Fig. 5

(a) $V_{modv}$

(b) $m_{gc}$

Fig. 6

Fig. 7 { (a) 0V ----- V_MOD

(b) 0V ----- V_CAR

(c) V_REF ----- V_OUT

Fig. 9

V=16.7ms

MODULATION ENVELOPE OF V_NS (a)

TOP    CENTER    BOTTOM

MODULATION ENVELOPE OF V_GL (b)

Fig. 8